# EUROPEAN PATENT SPECIFICATION

(11) **EP 2 569 909 B1**
(45) Date of publication and mention of the grant of the patent: **02.04.2014**
(21) Application number: 11724319.6
(22) Date of filing: 13.05.2011
(51) Int. Cl.: H04L 12/58, H04L 29/06, H04W 12/08, H04W 12/12

(54) **COMMUNICATIONS SYSTEM INCLUDING VALIDATION BASED UPON A UNIQUE IDENTIFICATION CHANGE AND RELATED METHODS**
KOMMUNIKATIONSSYSTEM MIT VALIDIERUNG AUF BASIS EINER EINDEUTIGEN IDENTIFIZIERUNGSÄNDERUNG UND DAMIT VERBUNDENE VERFAHREN
SYSTÈME DE COMMUNICATION COMPRENANT UNE VALIDATION BASÉE SUR UN CHANGEMENT D'IDENTIFICATION UNIQUE ET PROCÉDÉS ASSOCIÉS

(30) Priority: 14.05.2010 US 334983 P
(43) Date of publication of application: 20.03.2013
(73) Proprietor: BlackBerry Limited, Waterloo, ON N2K 0A7 (CA)
(72) Inventor: Lo Yvonne, Bellevue, WA 98008 (US); Pranowo Devy, Bellevue, WA 98008 (US); Lira Chris, Bellevue, WA 98008 (US); Cooper, Blair, Bellevue, WA 98008 (US); Diaz Roberto, Rolling Meadows, Il 600008 (US)
(74) Representative: MERH-IP Matias Erny Reichl Hoffmann
(86) International application number: PCT/US2011/036489
(87) International publication number: WO 2011/143591

(56) References cited:
- WO-A1-03/100629
- WO-A1-2006/053954
- WO-A2-2008/057026

## Description

### Technical Field

The present disclosure relates to the field of wireless communications, and more particularly, to mobile wireless communications devices with validation and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Many mobile wireless communications devices include a removable memory device that has information about the mobile wireless communications device stored thereon. For example, the removable memory device may include a unique ID. Configuration parameters, for example email configuration parameters, may be set based upon the unique ID.

The removable memory device may be changed in a mobile wireless communications device, for example when a user changes a mobile wireless communications device, or more particularly, when the removable memory device is stolen.

WO 2008/057026 A describes a method comprising blocking the sending of messages to a mobile device when a change in the unique ID is detected.

Upon a change in the removable memory device, it would be useful to validate a user's access to emails associated with the removable memory device.

The invention is defined in the independent claims. Further embodiments are defined in the dependent claims.

### Brief Description of the Drawings

FIG. 1 is a schematic block diagram of a communications system in accordance with an example embodiment of the present disclosure;
FIG. 2 is a plan view of the mobile wireless communications device of FIG. 1 illustrating a prompt for entry of user email access credentials, according to an example embodiment;
FIG. 3 is a plan view of the mobile wireless communications device of FIG. 1 illustrating a prompt for deletion of an email account and queued email, according to an example embodiment;
FIG. 4 is a plan view of the mobile wireless communications device of FIG. 1 prompting for acceptance of a UID change, according to an example embodiment;
FIG. 5 is a flow diagram of a method of communication in accordance with an example embodiment of the present disclosure;
FIG. 6 is a block diagram of another example embodiment of a mobile wireless communications device;
FIG. 7 is a block diagram of an example embodiment of a communication subsystem component of the mobile wireless communications device of FIG. 6;
FIG. 8 is an example block diagram of a node of a wireless network; and
FIG. 9 is a block diagram of a host system in one example configuration for use with the wireless network of FIG. 7 and the mobile wireless communications device of FIG. 6.

### Detailed Description

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout.

In accordance with one example embodiment, a communications system may include a mobile wireless communications device (also referred to herein as a mobile device) having a unique identification (UID) associated therewith and configured to send and receive emails. The communications system may also include an email server configured to withhold sending queued email to the mobile wireless communications device based upon a change in the UID associated with the mobile wireless communications device. The email server may also cooperate with the mobile wireless communications device to prompt for entry of at least one user email access credential, and responsive to validation of the at least one user email access credential, send the queued email to the mobile wireless communications device.

The mobile wireless communications device may include a housing and a removable memory device carried thereby and configured to store the UID. The removable memory may include a subscriber identity module (SIM) memory card, for example. The UID may include at least one of a subscriber identity module (SIM) ID, a billing ID, and a carrier ID, for example.

The mobile wireless communications device may further include a display and an input device. The mobile wireless communications device may further include a wireless transceiver and a controller. The controller may be configured to display on the display the prompt for entry of the at least one user email access credential. The controller may also be configured to receive the at least one user email access credential via the input device and send the at least one user email access credential via the wireless transceiver.

The at least one user email access credential may include at least one password, for example. The queued email may correspond to a plurality of email accounts.

The email server may be configured to cooperate with the mobile wireless communications device to prompt for deletion of at least one email account. The email server may also be configured to cooperate with the mobile wireless communications device to delete the queued email along with the at least one email account.

The communications system may further include a remote credentials database accessible by the email server to validate the at least one user email access credential. The communications system may also include at least one further communications device configured to cooperate with the email server to prompt for entry of at least one user email access credential, for example.

A method example embodiment is directed to a communications method that may include withholding sending queued email stored at an email server to the mobile wireless communications device based upon a change in a unique identification (UID) associated with the mobile wireless communications device, for example. The method may further include cooperating with the mobile wireless communications device to prompt for entry of at least one user email access credential, and responsive to validation of the at least one user email access credential, sending the queued email from the email server to the mobile wireless communications device.

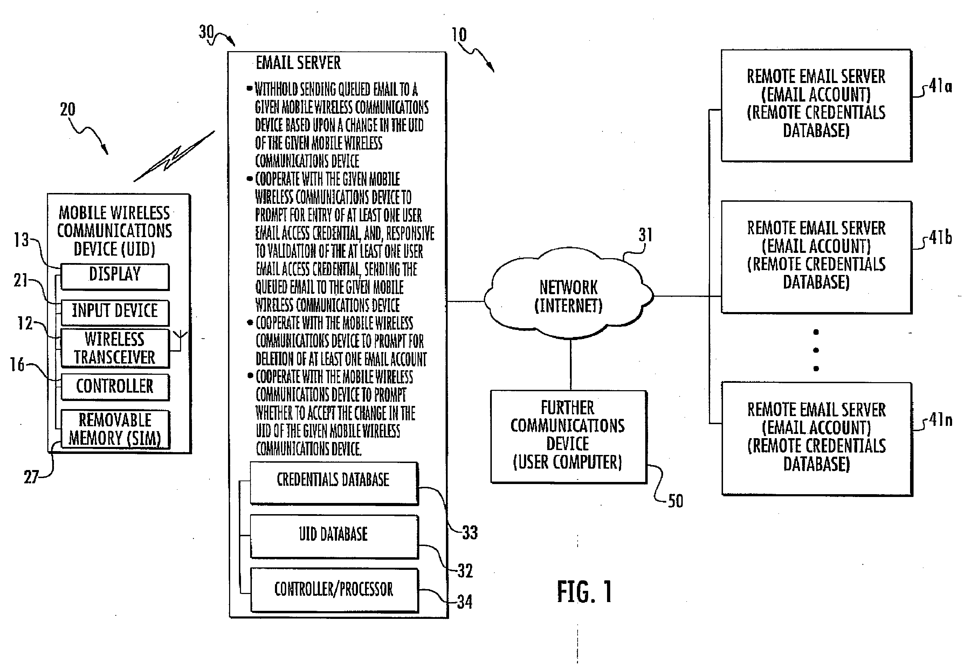

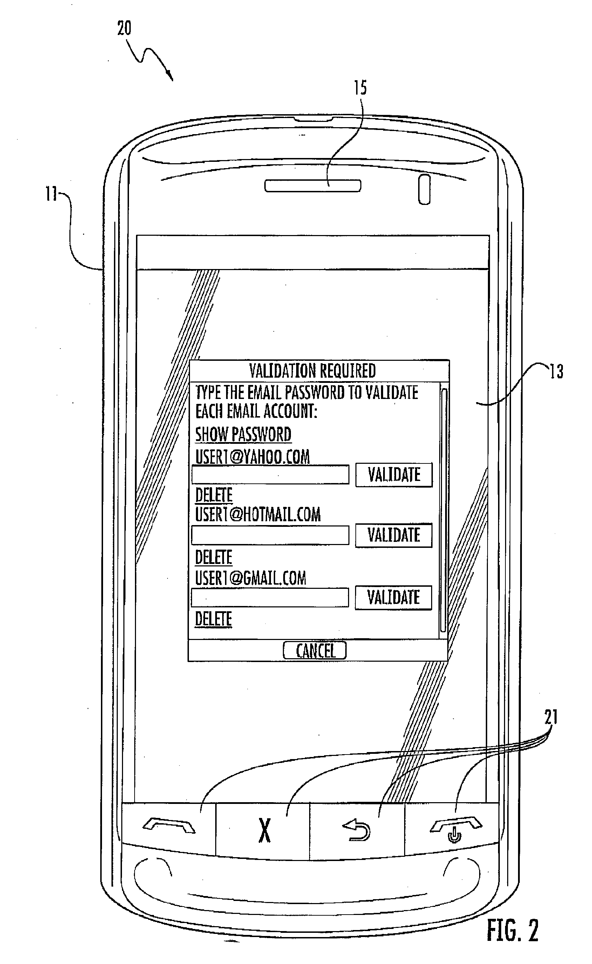

Referring initially to FIGS. 1 and 2, the communications system 10 includes a mobile wireless communications device 20 having a unique identification (UID) associated therewith. The mobile wireless communications device 20 is configured to send and receive emails.

The mobile wireless communications device 20 illustratively includes a housing 11, a wireless transceiver 12 carried by the housing, and a display 13 carried by the housing. A controller (also referred to as a processor) 16 is also carried by the housing 11.

The mobile wireless communications device 20 also illustratively includes an audio transducer 15 carried by the housing 11. The audio transducer 15 may be a microphone, or a speaker in example embodiments. In some example embodiments, there may be more than one audio transducer 15, for example a microphone and a speaker may be used.

The mobile wireless communications device 20 includes one or more input devices 21. The input devices 21 illustratively include push buttons for cooperating with the controller 16 to receive user input. Still further, an input device 21 may be coupled to the display 13 to accept a touching input therefrom and cooperate with the controller 16, for example.

The mobile wireless communications device 20 also includes a removable memory device 27 carried by the housing that is configured to store the UID. The removable memory device 27 may be a subscriber identity module (SIM) memory card, for example. The UID associated with the mobile wireless communications device 20 may include a SIM ID. Alternatively, or additionally, the UID may include one or more of a personal identification number (PIN) and/or a billing ID, for example a phone number, and/or a carrier ID.

The controller 16 is also carried by the housing 11 and cooperates with the wireless transceiver 12 to perform at least one mobile wireless communications function. For example, the wireless transceiver 12 may be a cellular transceiver or a WiFi transceiver, for example and may cooperate with the controller 16 to communicate data and/or voice communications. Other types of wireless transceivers and mobile wireless communications functions will be appreciated by those skilled in the art.

The communications system 10 also includes an email server 30 that includes a controller or processor 34. The email server 30 is configured to aggregate email from remote email servers 41a-41n. The email server 30 may communicate with the remote email servers via a network 31, for example the Internet, and may communicate wirelessly. Email aggregated from the remote servers 41a-41n may correspond to email accounts (Yahoo®, Google®, Hotmail®, etc.) and may be queued at the email server 30 for sending to the mobile wireless communications device 20, which is associated with the email accounts. The email server 30 may be configured to perform additional or different email services, as will be appreciated by those skilled in the art.

The email server 30 is configured to withhold sending queued email to the mobile wireless communications device 20 based upon a change in the UID association, for example the SIM ID associated with the mobile wireless communications device. A change in the UID associated with the mobile wireless communications device may occur, for example when a SIM memory card is changed, or remotely from a further communications device or user computer 50, via a hypertext markup language (HTML) interface, for example. In some example embodiments, the email server 30 may also cease aggregating email from the remote servers 41a-41n and sending the aggregated emails to the mobile wireless communications device. Withholding the queued email may be particularly useful when, for example a new or different SIM memory card 27 is carried by the mobile wireless communications device housing 11, and thus is no longer associated with the mobile wireless communications device 20. A new or different SIM memory card may be carried by a mobile wireless communications device 20, for example when a user changes or upgrades the user's mobile wireless communications device, or if the SIM memory card is stolen and coupled to the mobile wireless communications device that is not associated with the SIM ID.

To detect a change in the UID of the mobile wireless communications device, the email server 30 may compare the UID to a UID stored in a UID database 32 corresponding to a (associated) mobile wireless communications device 20.

If a change in the UID associated with the mobile wireless communications device 20 is detected, the email server 30 cooperates with the mobile wireless communications device to prompt for entry of a user email access credential (FIG. 2). The user email access credential may correspond to one of the email accounts on the remote servers 41 a-41n. Alternatively, in some example embodiments, the prompt may be for a user email access credential corresponding to each of the email accounts on the remote servers 41a-41 n. In other example embodiments, the prompt may be for a user email access credential corresponding to selected ones of the email accounts on the remote servers 41a-41n based upon the user input. The user email access credential is illustratively a password. Another type of user email access credential may be used, as will be appreciated by those skilled in the art.

The mobile wireless communications device controller 16 displays, on the display 13, the prompt for entry of the user email access credential. The user email access credential is received via the input device 21 and sent via the wireless transceiver 12 to the email server 30. Alternatively or additionally, the user email access credentials may be entered via the user computer 50 coupled to the email server 30 via the HTML or web interface, for example. In other words, the UID associated with the mobile wireless communications device 20 may be changed in the UID database 32 via the user computer 50.

The user email access credential received from the mobile wireless communications device 20 is validated by the email server 30 by cooperating with a respective remote credentials database corresponding to the user email access credential. The remote credentials database may be stored on a remote server 41 a-41n hosting the corresponding email account. The email server 30 attempts to login to the corresponding email account on the remote server 41a-41n using the user email access credential. The email server 30 usefully performs validation by executing a simple object access protocol (SOAP) function call. Further details of the SOAP functions are explained below. Of course, other or additional protocols may be used.

The email server 30 illustratively includes a credentials database 33. Based upon a successful validation or login to the corresponding email account on the remote server 41a-41n, the user email access credential may be compared to the corresponding stored email access credential for the UID. If match between a stored email access credential corresponding to the UID is not determined, the email server 30 may update the credentials database accordingly.

Responsive to a successful validation of the sent user email access credential (e.g. a successful login to the email account on the corresponding remote server 41 a-41 n), the email server 30 sends the queued email to the mobile wireless communications device 20. The queued email sent may correspond to queued email corresponding to each email account, or may correspond to email accounts that have been successfully validated. In other words, the email server 30 may continue to withhold queued email that has not been successfully validated. The email server 30 may resume other email services, for example email aggregation, based upon the successful validation. For example, in the case where a user has changed to a new mobile wireless communications device, the email server 30 sends queued email to and other email services are resumed with the new mobile wireless communications device and queued email and email services with the old mobile wireless communications device are terminated. As will be appreciated by those skilled in the art, the successful validation may be indicative of rightful ownership of a particular SIM memory card and/or mobile wireless communications device.

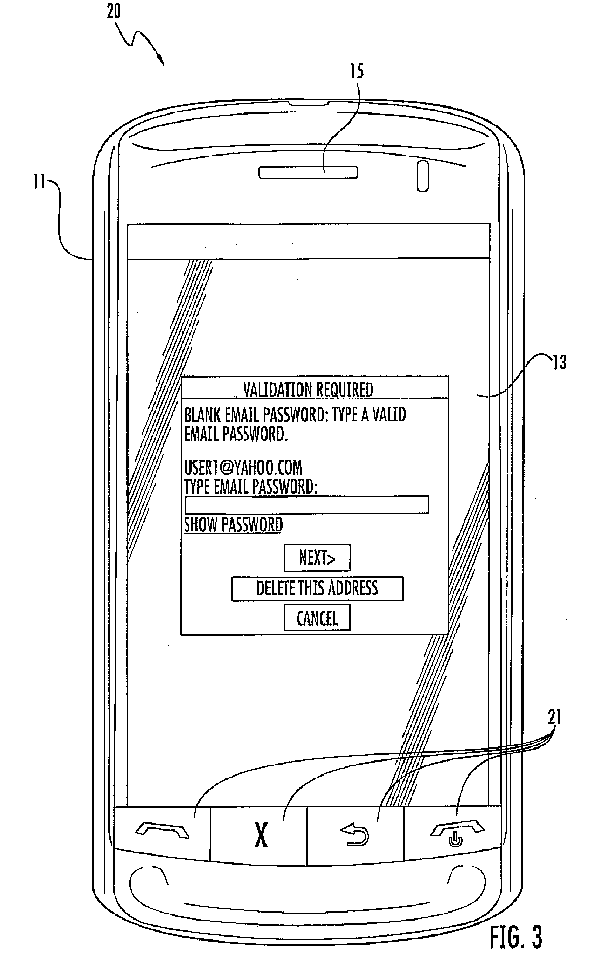

Referring now additionally to FIG. 3, if a validation fails, i.e. an unsuccessful login to the email account on the corresponding remote server 41a-41n, the email server 30 cooperates with the mobile wireless communications device 20 to prompt again for the user email access credential. The email server 30 also cooperates with the mobile wireless communications device 20 to prompt for deletion of an email account (FIGS. 2 and 3). Canceling, or logging out of the web interface if using the user computer 50, for example may terminate the device change. A device change may be resumed from the quit point. If no email account is associated with the mobile wireless communications device 20, the user may be prompted to enter email account information, for example via the mobile wireless communication device or via the user computer 50.

The email server 30 may cooperate with the mobile wireless communications device to delete an email account for which the user email access credential could not be verified, for example. In other words, in the case where the user email access credential is a password corresponding to one of the email accounts on the remote servers 41a-41n, if validation is not successful, the email server 30 may cooperate to delete the association of the email account with the UID, or more particularly, the SIM ID association. Deletion of an email account also deletes any corresponding queued email being withheld. The prompt for deletion may be included with other prompts, for example a prompt to enter (FIG. 2) or re-enter (FIG. 3) the password, as will be appreciated by those skilled in the art, as may not be based solely upon an unsuccessful validation.

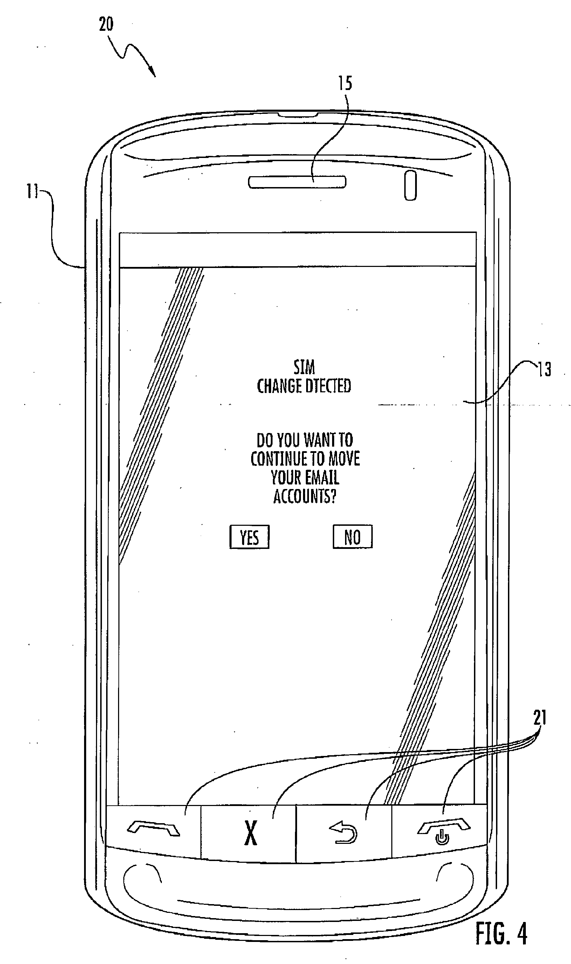

Referring now additionally to FIG. 4, in an example embodiment, upon a change in the associated UID, the email server 30 may also cooperate with the mobile wireless communications device 20 to prompt whether to accept the change in the UID association of the mobile wireless communications device, for example to create a new or change (i.e. move) the association between the queued email (and corresponding email accounts), and the UID. FIG. 4 shows an example prompt of "SIM change detected. Do you want to continue to move your email accounts?"

The mobile wireless communications device controller 16 may be configured to display an acceptance prompt. The controller 16 may receive acceptance of the UID association change via the input device 21 and send the acceptance to the email server 30.

Based upon an acceptance to change the UID association (e.g. the user responds "Yes" to the prompt of "Do you want to continue to move your email accounts?"), the email server 30 may cooperate with the mobile wireless communications device to prompt for entry of the user email access credential. Of course, the change in the UID association may not be accepted (e.g. the user responds "No" to the prompt of "Do you want to continue to move your email accounts?"), in which case, the email server 30 will not prompt for entry of the user email access credential and will not send queued email. Additionally, the email server 30 may also cooperate with the user computer 50 to prompt the user at the user computer whether to accept the change in the UID association of the mobile wireless communications device 20.

In some example embodiments, a confirmation may be displayed responsive to a successful validation. The confirmation may be displayed on the mobile wireless communications device 20 and/or the user computer 50, for example. The confirmation may indicate or display which email accounts are validated (i.e. display validated email accounts), may indicate that the mobile wireless communications device 20 is receiving queued email from the email server 30, indicate that selected deleted email accounts have been deleted, and/or indicate that the changed UID is now associated with the mobile wireless communications device. The confirmation may include other information.

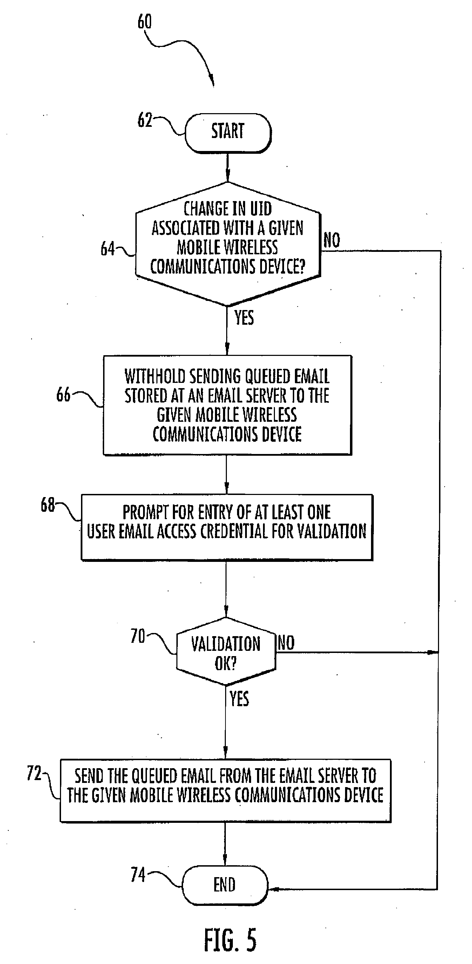

The flow diagram 60 in FIG. 5, is an example embodiment communications method. Beginning at Block 62, the method includes upon detecting a change in a unique identification (UID) associated with the mobile wireless communications device (Block 64), withholding sending queued email (Block 66) stored at an email server 30 to the mobile wireless communications device 20 (Block 66). If a change in the UID is not detected, the method ends at Block 74. The method also includes cooperating with the mobile wireless communications device 20 to prompt for entry of at least one user email access credential (Block 68), and responsive to validation of the at least one user email access credential (Block 70), sending the queued email from the email server 30 to the mobile wireless communications device (Block 72), before ending at Block 74. If the validation is unsuccessful, the queued email is not sent and the method ends at Block 74.

As will be appreciated by those skilled in the art, based upon a successful UID, e.g. PIN, change, with respect to the communications system described herein, and more particularly to the user interface on the mobile wireless communications device, all pending messages for all moved email accounts (all validated) will be sent to the new device. If any email account was deleted in the process, pending messages of deleted email accounts will not be sent to the new device.

If, based upon an unsuccessful UID change where the user quits during the device change process, all pending messages will not be sent to the new device. If the SIM is inserted back in the old device, for example pending messages will be sent to the old device. In example embodiments, in either case, all pending messages will be deleted if the user does a SIM swap when they were out of coverage for more than 24 hours. The number of hours is configurable. This happens whether or not the user validates any or all email sources.

With respect to the HTML user interface that requests a username and password validation, sources are generally not invalidated until the user finishes the device change process. Email account sources are deleted if any email account is deleted during the device change process. A UID change occurs at the end of the device change process even if the user deleted all email accounts.

As will be appreciated by those skilled in the art, with respect to a mobile wireless communications device user interface, email sources are invalidated when a SIM is inserted into a different device. Email account sources are deleted if any email account is deleted during the device change process. Additionally, a UID or PIN change occurrs at the end of the device change process even if the user deleted all email accounts.

With respect to a single or seamless sign-on user interface on the mobile wireless communications device, for example, where a user is prompted for a single credential such as an unlock code, email sources are invalidated when the SIM is inserted into a different device. It should be noted that in a single sign-on interface, the user's username and password is sent for verification without the user's knowledge based upon successful entry of the single credential. Email account sources are not deleted if the user could not verify any email password and deleted all email accounts during the device change process. A UID change does not occur at the end of the device change process if the user deleted all email accounts. Moreover, the user will get a "Device Change" when an email setup icon is clicked.

A "Remember Me" option is available where it may be determined whether the user should be treated as a single sign-on user. Additionally, email sources are invalidated when SIM is inserted into a different device. Email account sources are not deleted if the user could not verify any email password and deleted all email accounts during the device change process. The PIN change does not occur at the end of the device change process if the user deleted all email accounts. Still further, the user will get a "Device Change" when email setup icon is clicked.

With respect to a single sign-on user interface at the mobile wireless communications device, email sources are invalidated when SIM is inserted into a different device. Email account sources are not deleted if the user could not verify any email password and deleted all email accounts during the device change process. A UID change does not occur at the end of the device change process if the user deleted all email accounts, and the user will get a "Device Change" when email setup icon is clicked.

The example embodiments described herein generally relate to a mobile wireless communication device, hereafter referred to as a mobile wireless communications device, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

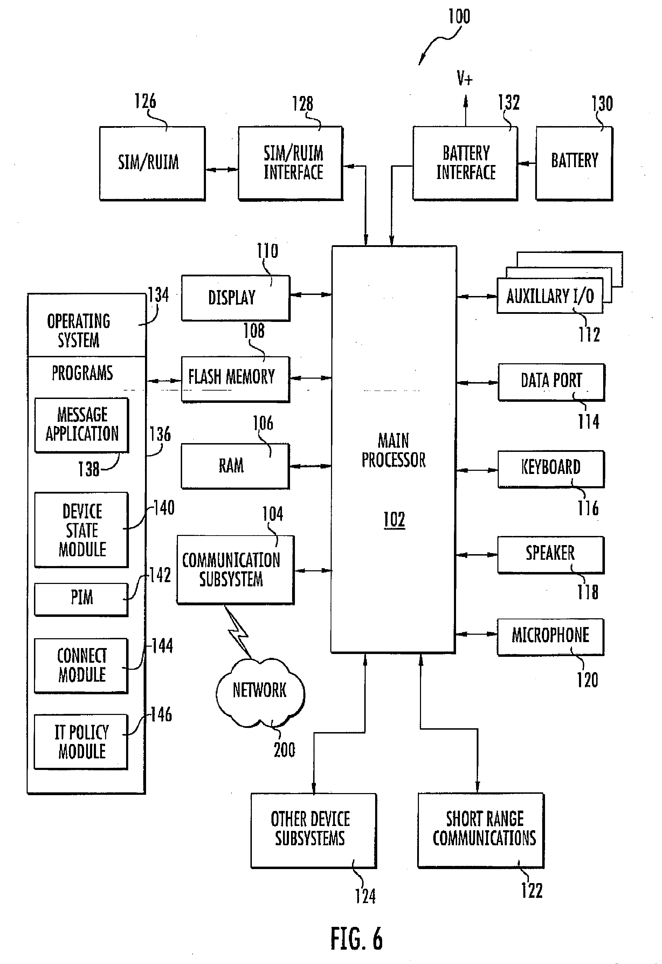

The mobile wireless communications device is a two-way communication device with advanced data communication capabilities including the capability to communicate with other mobile wireless communications devices or computer systems through a network of transceiver stations. The mobile wireless communications device may also have the capability to allow voice communication. Depending on the functionality provided by the mobile wireless communications device, it may be referred to as a data messaging device, a two-way pager, a cellular telephone with data messaging capabilities, a wireless internet appliance, or a data communication device (with or without telephony capabilities). To aid the reader in understanding the structure of the mobile wireless communications device and how it communicates with other devices and host systems, reference will now be made to FIGS. 6 through 9.

Referring first to FIG. 6, shown therein is a block diagram of another mobile wireless communications device 100, which may be used in place of mobile wireless communications device 20 and in other example embodiments disclosed herein. The mobile wireless communications device 100 includes a number of components such as a main processor 102 that controls the overall operation of the mobile wireless communications device 100. Communication functions, including data and voice communications, are performed through a communication subsystem 104. The communication subsystem 104 receives messages from and sends messages to a wireless network 200. In this example embodiment of the mobile wireless communications device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile wireless communications device 100 is a GSM/GPRS wireless network in one example implementation, other wireless networks may also be associated with the mobile wireless communications device 100 in variant implementations. The different types of wireless networks that may be employed include, for example data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, MobitexTM and DataTACTM network communication systems. Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the mobile wireless communications device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile wireless communications device 100 can send and receive communication signals over the wireless network 200 after required network registration or activation procedures have been completed. Network access is associated with a subscriber or user of the mobile wireless communications device 100. To identify a subscriber, the mobile wireless communications device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile wireless communications device 100 and to personalize the mobile wireless communications device 100, among other things. Without the SIM card 126, the mobile wireless communications device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile wireless communications device. The SIM card/RUIM 126 may store additional subscriber information for a mobile wireless communications device as well, including datebook (or calendar) information and recent call information. Alternatively, user identification information can also be programmed into the flash memory 108.

The mobile wireless communications device 100 is a battery-powered device and includes a battery interface 132 for receiving one or more rechargeable batteries 130. In at least some example embodiments, the battery 130 can be a smart battery with an embedded microprocessor. The battery interface 132 is coupled to a regulator (not shown), which assists the battery 130 in providing power V+ to the mobile wireless communications device 100. Although current technology makes use of a battery, future technologies such as micro fuel cells may provide the power to the mobile wireless communications device 100.

The mobile wireless communications device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile wireless communications device 100 during its manufacture. Other software applications include a message application 138 that can be any suitable software program that allows a user of the mobile wireless communications device 100 to send and receive electronic messages. Various alternatives exist for the message application 138 as is well known to those skilled in the art. Messages that have been sent or received by the user are typically stored in the flash memory 108 of the mobile wireless communications device 100 or some other suitable storage element in the mobile wireless communications device 100. In at least some example embodiments, some of the sent and received messages may be stored remotely from the device 100 such as in a data store of an associated host system that the mobile wireless communications device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile wireless communications device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile wireless communications device subscriber's corresponding data items stored and/or associated with a host computer system. This functionality creates a mirrored host computer on the mobile wireless communications device 100 with respect to such items. This can be particularly useful when the host computer system is the mobile wireless communications device subscriber's office computer system.

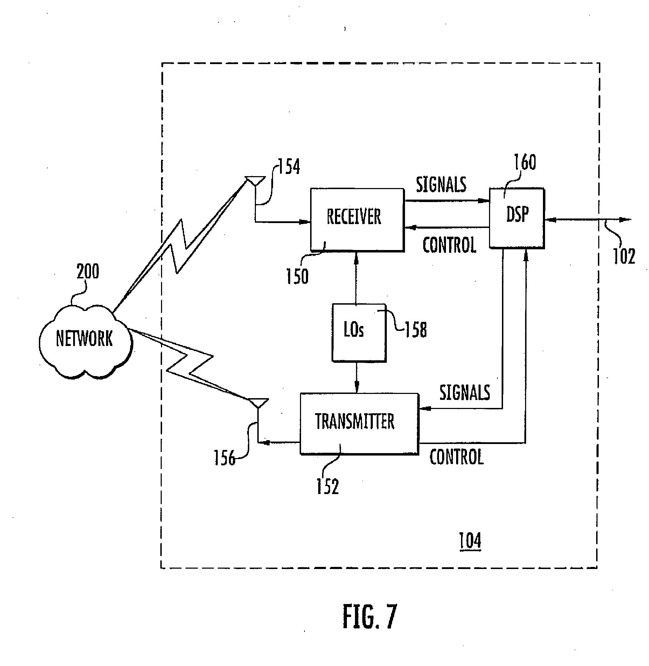

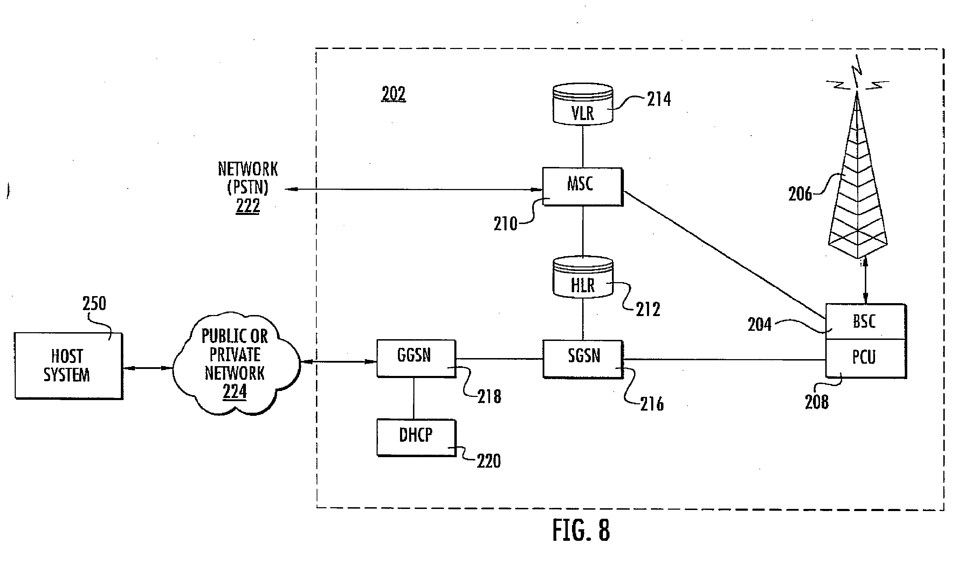

The mobile wireless communications device 100 also includes a connect module 144, and an IT policy module 146. The connect module 144 implements the communication protocols that are required for the mobile wireless communications device 100 to communicate with the wireless infrastructure and any host system, such as an enterprise system, that the mobile wireless communications device 100 is authorized to interface with. Examples of a wireless infrastructure and an enterprise system are in FIGS. 7 and 8, which are described in more detail below.

The connect module 144 includes a set of APIs that can be integrated with the mobile wireless communications device 100 to allow the mobile wireless communications device 100 to use any number of services associated with the enterprise system. The connect module 144 allows the mobile wireless communications device 100 to establish an end-to-end secure, authenticated communication pipe with the host system. A subset of applications for which access is provided by the connect module 144 can be used to pass IT policy commands from the host system to the mobile wireless communications device 100. This can be done in a wireless or wired manner. These instructions can then be passed to the IT policy module 146 to modify the configuration of the device 100. Alternatively, in some cases, the IT policy update can also be done over a wired connection.

The IT policy module 146 receives IT policy data that encodes the IT policy. The IT policy module 146 then ensures that the IT policy data is authenticated by the mobile wireless communications device 100. The IT policy data can then be stored in the flash memory 106 in its native form. After the IT policy data is stored, a global notification can be sent by the IT policy module 146 to all of the applications residing on the mobile wireless communications device 100. Applications for which the IT policy may be applicable then respond by reading the IT policy data to look for IT policy rules that are applicable.

The IT policy module 146 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some example embodiments, the IT policy module 146 can determine which applications are affected by the IT policy data and send a notification to only those applications. In either of these cases, for applications that aren't running at the time of the notification, the applications can call the parser or the IT policy module 146 when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module 146 sends an acknowledgement back to the host system to indicate that the IT policy data was received and successfully applied.

Other types of software applications can also be installed on the mobile wireless communications device 100. These software applications can be third party applications, which are added after the manufacture of the mobile wireless communications device 100. Examples of third party applications include games, calculators, utilities, etc.

The additional applications can be loaded onto the mobile wireless communications device 100 through at least one of the wireless network 200, the auxiliary I/O subsystem 112, the data port 114, the short-range communications subsystem 122, or any other suitable device subsystem 124. This flexibility in application installation increases the functionality of the mobile wireless communications device 100 and may provide enhanced on-device functions, communication-related functions, or both. For example, secure communication applications may enable electronic commerce functions and other such financial transactions to be performed using the mobile wireless communications device 100.

The data port 114 enables a subscriber to set preferences through an external device or software application and extends the capabilities of the mobile wireless communications device 100 by providing for information or software downloads to the mobile wireless communications device 100 other than through a wireless communication network. The alternate download path may, for example be used to load an encryption key onto the mobile wireless communications device 100 through a direct and thus reliable and trusted connection to provide secure device communication.

The data port 114 can be any suitable port that enables data communication between the mobile wireless communications device 100 and another computing device. The data port 114 can be a serial or a parallel port. In some instances, the data port 114 can be a USB port that includes data lines for data transfer and a supply line that can provide a charging current to charge the battery 130 of the mobile wireless communications device 100.

The short-range communications subsystem 122 provides for communication between the mobile wireless communications device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile wireless communications device 100 is substantially similar, except that the received signals are output to the speaker 118, and signals for transmission are generated by the microphone 120. Alternative voice or audio I/O subsystems, such as a voice message recording subsystem, can also be implemented on the mobile wireless communications device 100. Although voice or audio signal output is accomplished primarily through the speaker 118, the display 110 can also be used to provide additional information such as the identity of a calling party, duration of a voice call, or other voice call related information.

Referring now to FIG. 7, an example block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile wireless communications device 100 is intended to operate. Thus, it should be understood that the design illustrated in FIG. 7 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile wireless communications device 100 and the wireless network 200 can contain one or more different channels, typically different RF channels, and associated protocols used between the mobile wireless communications device 100 and the wireless network 200. An RF channel is a limited resource that must be conserved, typically due to limits in overall bandwidth and limited battery power of the mobile wireless communications device 100.

When the mobile wireless communications device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

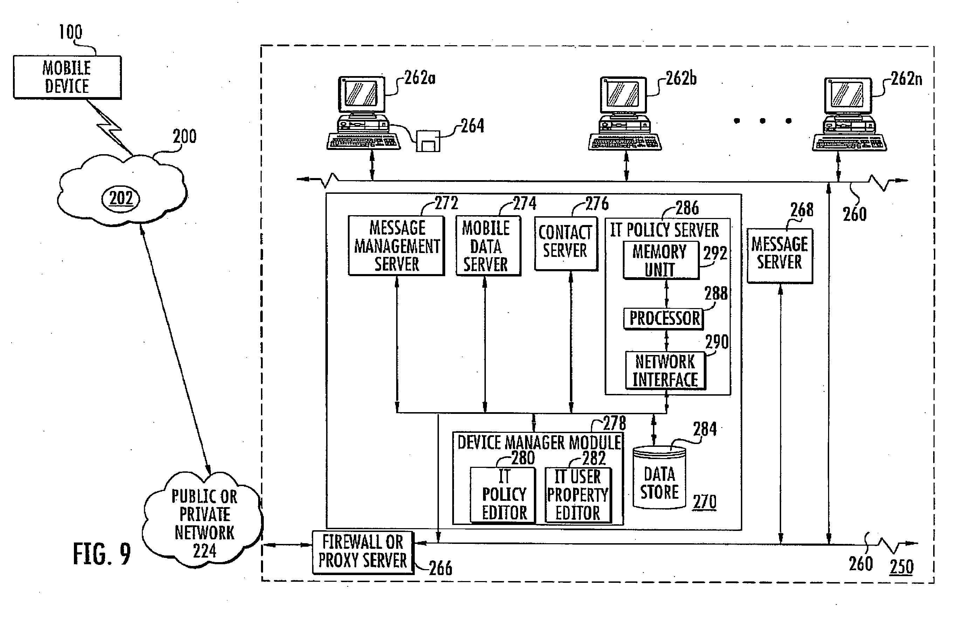

Referring now to FIG. 8, a block diagram of an example implementation of a node 202 of the wireless network 200 is shown. In practice, the wireless network 200 includes one or more nodes 202. In conjunction with the connect module 144, the mobile wireless communications device 100 can communicate with the node 202 within the wireless network 200. In the example implementation of FIG. 9, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile wireless communications devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the mobile wireless communications device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile wireless communications devices within its cell via the station 206. The fixed transceiver equipment normally performs such functions as modulation and possibly encoding and/or encryption of signals to be transmitted to the mobile wireless communications device 100 in accordance with particular, usually predetermined, communication protocols and parameters, under control of its controller. The fixed transceiver equipment similarly demodulates and possibly decodes and decrypts, if necessary, any communication signals received from the mobile wireless communications device 100 within its cell. Communication protocols and parameters may vary between different nodes. For example, one node may employ a different modulation scheme and operate at different frequencies than other nodes.

For all mobile wireless communications devices 100 registered with a specific network, permanent configuration data such as a user profile is stored in the HLR 212. The HLR 212 also contains location information for each registered mobile wireless communications device and can be queried to determine the current location of a mobile wireless communications device. The MSC 210 is responsible for a group of location areas and stores the data of the mobile wireless communications devices currently in its area of responsibility in the VLR 214. Further, the VLR 214 also contains information on mobile wireless communications devices that are visiting other networks. The information in the VLR 214 includes part of the permanent mobile wireless communications device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile wireless communications device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, the mobile wireless communications device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile wireless communications device 100, through the PCU 208, and the SGSN 216 to an Access Point Node (APN) within the GGSN 218. The APN represents a logical end of an IP tunnel that can either access direct internet compatible services or private network connections. The APN also represents a security mechanism for the network 200, insofar as each mobile wireless communications device 100 must be assigned to one or more APNs and mobile wireless communications devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile wireless communications device 100 is not using its PDP Context, the PDP Context can be de-allocated and the IP address returned to the IP address pool managed by the DHCP server 220.

Referring now to FIG. 9, shown therein is a block diagram illustrating components of an example configuration of a host system 250 that the mobile wireless communications device 100 can communicate with in conjunction with the connect module 144. The host system 250 will typically be a corporate enterprise or other local area network (LAN), but may also be a home office computer or some other private system, for example in variant implementations. In this example shown in FIG. 9, the host system 250 is depicted as a LAN of an organization to which a user of the mobile wireless communications device 100 belongs. Typically, a plurality of mobile wireless communications devices can communicate wirelessly with the host system 250 through one or more nodes 202 of the wireless network 200.

The host system 250 includes a number of network components connected to each other by a network 260. For instance, a user's desktop computer 262a with an accompanying cradle 264 for the user's mobile wireless communications device 100 is situated on a LAN connection. The cradle 264 for the mobile wireless communications device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the mobile wireless communications device 100, and may be particularly useful for bulk information updates often performed in initializing the mobile wireless communications device 100 for use. The information downloaded to the mobile wireless communications device 100 may include certificates used in the exchange of messages.

It will be understood by persons skilled in the art that the user computers 262a-262n will typically also be connected to other peripheral devices, such as printers, etc. which are not explicitly shown in FIG. 9. furthermore, only a subset of network components of the host system 250 are shown in FIG. 9 for ease of exposition, and it will be understood by persons skilled in the art that the host system 250 will include additional components that are not explicitly shown in FIG. 9 for this example configuration. More generally, the host system 250 may represent a smaller part of a larger network (not shown) of the organization, and may include different components and/or be arranged in different topologies than that shown in the example embodiment of FIG. 9.

To facilitate the operation of the mobile wireless communications device 100 and the wireless communication of messages and message-related data between the mobile wireless communications device 100 and components of the host system 250, a number of wireless communication support components 270 can be provided. In some implementations, the wireless communication support components 270 can include a message management server 272, a mobile data server 274, a contact server 276, and a device manager module 278. The device manager module 278 includes an IT Policy editor 280 and an IT user property editor 282, as well as other software components for allowing an IT administrator to configure the mobile wireless communications devices 100. In an alternative example embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the mobile wireless communications devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this example embodiment, the mobile wireless communications device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the mobile wireless communications device 100. The wireless VPN router allows a VPN connection to be established directly through a specific wireless network to the mobile wireless communications device 100. The wireless VPN router can be used with the Internet Protocol (IP) Version 6 (IPV6) and IP-based wireless networks. This protocol can provide enough IP addresses so that each mobile wireless communications device has a dedicated IP address, making it possible to push information to a mobile wireless communications device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile wireless communications device 100 in this alternative implementation.

Messages intended for a user of the mobile wireless communications device 100 are initially received by a message server 268 of the host system 250. Such messages may originate from any number of sources. For instance, a message may have been sent by a sender from the computer 262b within the host system 250, from a different mobile wireless communications device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some example implementations of the message server 268 include a Microsoft ExchangeTM server, a Lotus DominoTM server, a Novell GroupwiseTM server, or another suitable mail server installed in a corporate environment. In some implementations, the host system 250 may include multiple message servers 268. The message server 268 may also be adapted to provide additional functions beyond message management, including the management of data associated with calendars and task lists, for example.

When messages are received by the message server 268, they are typically stored in a data store associated with the message server 268. In at least some example embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the mobile wireless communications device 100. Alternatively, the data store associated with the message server 268 can store all of the messages for the user of the mobile wireless communications device 100 and only a smaller number of messages can be stored on the mobile wireless communications device 100 to conserve memory. For instance, the most recent messages (i.e. those received in the past two to three months for example) can be stored on the mobile wireless communications device 100.

When operating the mobile wireless communications device 100, the user may wish to have e-mail messages retrieved for delivery to the mobile wireless communications device 100. The message application 138 operating on the mobile wireless communications device 100 may also request messages associated with the user's account from the message server 268. The message application 138 may be configured (either by the user or by an administrator, possibly in accordance with an organization's information technology (IT) policy) to make this request at the direction of the user, at some pre-defined time interval, or upon the occurrence of some pre-defined event. In some implementations, the mobile wireless communications device 100 is assigned its own e-mail address, and messages addressed specifically to the mobile wireless communications device 100 are automatically redirected to the mobile wireless communications device 100 as they are received by the message server 268.

The message management server 272 can be used to specifically provide support for the management of messages, such as e-mail messages, that are to be handled by mobile wireless communications devices. Generally, while messages are still stored on the message server 268, the message management server 272 can be used to control when, if, and how messages are sent to the mobile wireless communications device 100. The message management server 272 also facilitates the handling of messages composed on the mobile wireless communications device 100, which are sent to the message server 268 for subsequent delivery.

For example, the message management server 272 may monitor the user's "mailbox" (e.g. the message store associated with the user's account on the message server 268) for new e-mail messages, and apply user-definable filters to new messages to determine if and how the messages are relayed to the user's mobile wireless communications device 100. The message management server 272 may also compress and encrypt new messages (e.g. using an encryption technique such as Data Encryption Standard (DES), Triple DES, or Advanced Encryption Standard (AES)) and push them to the mobile wireless communications device 100 via the shared network infrastructure 224 and the wireless network 200. The message management server 272 may also receive messages composed on the mobile wireless communications device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the mobile wireless communications device 100 can be defined (e.g. by an administrator in accordance with IT policy) and enforced by the message management server 272. These may include whether the mobile wireless communications device 100 may receive encrypted and/or signed messages, minimum encryption key sizes, whether outgoing messages must be encrypted and/or signed, and whether copies of all secure messages sent from the mobile wireless communications device 100 are to be sent to a pre-defined copy address, for example.

The message management server 272 may also be adapted to provide other control functions, such as only pushing certain message information or pre-defined portions (e.g. "blocks") of a message stored on the message server 268 to the mobile wireless communications device 100. For example, in some cases, when a message is initially retrieved by the mobile wireless communications device 100 from the message server 268, the message management server 272 may push only the first part of a message to the mobile wireless communications device 100, with the part being of a pre-defined size (e.g. 2 KB). The user can then request that more of the message be delivered in similar-sized blocks by the message management server 272 to the mobile wireless communications device 100, possibly up to a maximum pre-defined message size. Accordingly, the message management server 272 facilitates better control over the type of data and the amount of data that is communicated to the mobile wireless communications device 100, and can help to minimize potential waste of bandwidth or other resources.

The mobile data server 274 encompasses any other server that stores information that is relevant to the corporation. The mobile data server 274 may include, but is not limited to, databases, online data document repositories, customer relationship management (CRM) systems, or enterprise resource planning (ERP) applications.

The contact server 276 can provide information for a list of contacts for the user in a similar fashion as the address book on the mobile wireless communications device 100. Accordingly, for a contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the contact server 276, the device manager module 278, the data store 284 and the IT policy server 286 do not need to be implemented on separate physical servers within the host system 250. For example, some or all of the functions associated with the message management server 272 may be integrated with the message server 268, or some other server in the host system 250. Alternatively, the host system 250 may include multiple message management servers 272, particularly in variant implementations where a large number of mobile wireless communications devices need to be supported.

Alternatively, in some example embodiments, the IT policy server 286 can provide the IT policy editor 280, the IT user property editor 282 and the data store 284. In some cases, the IT policy server 286 can also provide the device manager module 278. The processor 288 of the IT policy server 286 can be used to perform the various steps of a method for providing IT policy data that is customizable on a per-user basis as explained further below and in conjunction with FIGS. 6 to 9. The processor 288 can execute the editors 280 and 282. In some cases, the functionality of the editors 280 and 282 can be provided by a single editor. In some cases, the memory unit 292 can provide the data store 284.

The device manager module 278 provides an IT administrator with a graphical user interface with which the IT administrator interacts to configure various settings for the mobile wireless communications devices 100. As mentioned, the IT administrator can use IT policy rules to define behaviors of certain applications on the mobile wireless communications device 100 that are permitted such as phone, web browser or Instant Messenger use. The IT policy rules can also be used to set specific values for configuration settings that an organization requires on the mobile wireless communications devices 100 such as auto signature text, WLAN/VoIP/VPN configuration, security requirements (e.g. encryption algorithms, password rules, etc.), specifying themes or applications that are allowed to run on the mobile wireless communications device 100, and the like.

Many modifications and other example embodiments of the present disclose will come to the mind of one skilled in the art having the benefit of the teachings presented in the foregoing descriptions and the associated drawings. Therefore, it is understood that the present disclosure is not to be limited to the specific example embodiments disclosed, and that modifications and example embodiments are intended to be included within the scope of the appended claims.

## Claims

1. A communications system comprising:
a mobile wireless communications device having a unique identification, UID, associated therewith and configured to send and receive emails; and
an email server configured to, upon detecting a change in the UID associated with the mobile wireless communications device,
withhold sending queued email to the mobile wireless communications device, and
cooperate with the mobile wireless communications device to prompt for entry of at least one user email access credential, and responsive to validation of the at least one user email access credential, sending the queued email to the mobile wireless communications device.

2. The communications system according to Claim 1, wherein the mobile wireless communications device comprises a housing and a removable memory device carried thereby and configured to store the UID.

3. The communications system according to Claim 2, wherein the removable memory comprises a subscriber identity module, SIM, memory card.

4. The communications system according to Claim 1, wherein the UID comprises at least one of a subscriber identity module, SIM, ID, a billing ID, and a carrier ID.

5. The communications system according to Claim 1, wherein the mobile wireless communications device further comprises:
a display;
an input device;
a wireless transceiver; and
a controller configured to
display on the display the prompt for entry of the at least one user email access credential,
receive the at least one user email access credential via the input device, and
send the at least one user email access credential via the wireless transceiver.

6. The communications system according to Claim 1, wherein the at least one user email access credential comprises at least one password.

7. The communications system according to Claim 1, wherein the queued email corresponds to a plurality of email accounts.

8. The communications system according to Claim 7, wherein the email server is configured to cooperate with the mobile wireless communications device to prompt for deletion of at least one email account.

9. The communications system according to Claim 1, further comprising a remote credentials database accessible by the email server to validate the at least one user email access credential.

10. The communications system according to Claim 1, further comprising at least one further communications device configured to cooperate with the email server to prompt for entry of at least one user email access credential.

11. An email server for cooperating with a mobile wireless communications device having a unique identification, UID, associated therewith and configured to send and receive emails, the email server comprising:
a controller and a memory coupled thereto and configured to, upon detecting a change in the UID associated with the mobile wireless communications device,
withhold sending queued email to the mobile wireless communications device, and
cooperate with the mobile wireless communications device to prompt for entry of at least one user email access credential, and responsive to validation of the at least one user email access credential, sending the queued email to the mobile wireless communications device.

12. The email server according to Claim 11, wherein the at least one user email access credential comprises at least one password.

13. The email server according to Claim 11, wherein the queued email corresponds to a plurality of email accounts.

14. A communications method comprising:
upon detecting a change in a unique identification, UID, associated with a mobile wireless communications device,
withholding sending queued email stored at an email server to the mobile wireless communications device, and
cooperating with the mobile wireless communications device to prompt for entry of at least one user email access credential, and responsive to validation of the at least one user email access credential, sending the queued email from the email server to the mobile wireless communications device.

15. The method according to Claim 14, wherein the UID comprises at least one of a subscriber identity module, SIM, ID, a billing ID, and a carrier ID.

## Patentansprüche

1. Ein Kommunikationssystem, das aufweist:
eine mobile drahtlose Kommunikationsvorrichtung mit einer assoziierten eindeutigen Identifikation (UID - unique identification) und konfiguriert zum Senden und Empfangen von Emails; und
einen Email-Server, der konfiguriert, bei einem Erfassen einer Änderung der UID, die mit der mobilen drahtlosen Kommunikationsvorrichtung assoziiert ist, zum
Zurückhalten eines Sendens von Email in einer Warteschlange an die mobile drahtlose Kommunikationsvorrichtung,
Zusammenarbeiten mit der mobilen drahtlosen Kommunikationsvorrichtung zum Auffordern für eine Eingabe von zumindest einem Benutzer-Email-Zugriffsberechtigungsnachweis, und in Reaktion auf eine Validierung des zumindest einen Benutzer-Email-Zugriffsberechtigungsnachweises, Senden der Email in der Warteschlange an die mobile drahtlose Kommunikationsvorrichtung.

2. Das Kommunikationssystem gemäß Anspruch 1, wobei die mobile drahtlose Kommunikationsvorrichtung ein Gehäuse und eine entfernbare Speichervorrichtung aufweist, die von diesem getragen wird und konfiguriert ist, die UID zu speichern.

3. Das Kommunikationssystem gemäß Anspruch 2, wobei der entfernbare Speicher eine Teilnehmeridentitätsmodul(SIM - subscriber identity module)-Speicherkarte aufweist.

4. Das Kommunikationssystem gemäß Anspruch 1, wobei die UID zumindest eines aus einer Teilnehmeridentitätsmodul(SIM - subscriber identity module)-ID, einer Abrechnungs-ID und einer Carrier-ID aufweist.

5. Das Kommunikationssystem gemäß Anspruch 1, wobei die mobile drahtlose Kommunikationsvorrichtung weiter aufweist:
eine Anzeige;
eine Eingabevorrichtung;
einen drahtlosen Transceiver; und
eine Steuervorrichtung, die konfiguriert ist zum Anzeigen auf der Anzeige der Aufforderung zur Eingabe des zumindest einen Benutzer-Email-Zugriffsberechtigungsnachweises, Empfangen des zumindest einen Benutzer-Email-Zugriffsberechtigungsnachweises über die Eingabevorrichtung, und Senden des zumindest einen Benutzer-Email-Zugriffsberechtigungsnachweises über den drahtlosen Transceiver.

6. Das Kommunikationssystem gemäß Anspruch 1, wobei der zumindest eine Benutzer-Email-Zugriffsberechtigungsnachweis zumindest ein Passwort aufweist.

7. Das Kommunikationssystem gemäß Anspruch 1, wobei die Email in der Warteschlange einer Vielzahl von Email-Konten entspricht.

8. Das Kommunikationssystem gemäß Anspruch 7, wobei der Email-Server konfiguriert ist zum Zusammenarbeiten mit der mobilen drahtlosen Kommunikationsvorrichtung zur Aufforderung zum Löschen von zumindest einem Email-Konto.

9. Das Kommunikationssystem gemäß Anspruch 1, das weiter eine entfernte Berechtigungsnachweis-Datenbank aufweist, auf die der Email-Server zugreifen kann, um den zumindest einen Benutzer-Email-Zugriffsberechtigungsnachweis zu validieren.

10. Das Kommunikationssystem gemäß Anspruch 1, das weiter zumindest eine weitere Kommunikationsvorrichtung aufweist, die konfiguriert ist zum Zusammenarbeiten mit dem Email-Server zur Aufforderung zur Eingabe von zumindest einem Benutzer-Email-Zugriffsberechtigungsnachweis.

11. Ein Email-Server zum Zusammenarbeiten mit einer mobilen drahtlosen Kommunikationsvorrichtung mit einer assoziierten eindeutigen Identifikation (UID - unique identification) und konfiguriert zum Senden und Empfangen von Emails, wobei der Email-Server aufweist:
eine Steuervorrichtung und einen Speicher, damit gekoppelt und konfiguriert, bei einem Erfassen einer Änderung der UID, die mit der mobilen drahtlosen Kommunikationsvorrichtung assoziiert ist, zum
Zurückhalten eines Sendens von Email in einer Warteschlange an die mobile drahtlose Kommunikationsvorrichtung, und Zusammenarbeiten mit der mobilen drahtlosen Kommunikationsvorrichtung zum Auffordern für eine Eingabe von zumindest einem Benutzer-Email-Zugriffsberechtigungsnachweis, und in Reaktion auf eine Validierung des zumindest einen Benutzer-Email-Zugriffsberechtigungsnachweises, Senden der Email in der Warteschlange an die mobile drahtlose Kommunikationsvorrichtung.

12. Der Email-Server gemäß Anspruch 11, wobei der zumindest eine Benutzer-Email-Zugriffsberechtigungsnachweis zumindest ein Passwort aufweist.

13. Der Email-Server gemäß Anspruch 11, wobei die Email in der Warteschlange einer Vielzahl von Email-Konten entspricht.

14. Ein Kommunikationsverfahren, das aufweist:
bei einem Erfassen einer Änderung einer eindeutigen Identifikation (UID - unique identification), die mit einer mobilen drahtlosen Kommunikationsvorrichtung assoziiert ist,
Zurückhalten eines Sendens von Email in einer Warteschlange, die an einem Email-Server gespeichert ist, an die mobile drahtlose Kommunikationsvorrichtung; und
Zusammenarbeiten mit der mobilen drahtlosen Kommunikationsvorrichtung zum Auffordern für eine Eingabe von zumindest einem Benutzer-Email-Zugriffsberechtigungsnachweis, und in Reaktion auf eine Validierung des zumindest einen Benutzer-Email-Zugriffsberechtigungsnachweises, Senden der Email in der Warteschlange von dem Email-Server an die mobile drahtlose Kommunikationsvorrichtung.

15. Das Verfahren gemäß 14, wobei die UID zumindest eines aus einer Teilnehmeridentitätsmodul(SIM - subscriber identity module)-ID, einer Abrechnungs-ID und einer Carrier-ID aufweist.

## Revendications

1. Système de communication comprenant :
un dispositif de communication mobile sans fil qui possède un code d'identification unique, UID, qui lui a été attribué et qui est configuré pour envoyer et recevoir des courriels ; et
un serveur de courriel configuré, après détection d'un changement dans le code UID associé au dispositif de communication mobile sans fil, pour :
cesser d'envoyer le courriel mis en file d'attente au dispositif de communication mobile sans fil ; et
coopérer avec le dispositif de communication mobile sans fil pour fournir une invite de saisie d'au moins un élément justificatif d'utilisateur pour l'accès au courriel et, après validation dudit au moins un élément justificatif d'utilisateur pour l'accès au courriel, envoyer le courriel mis en file d'attente au dispositif de communication mobile sans fil.

2. Système de communication selon la revendication 1, dans lequel le dispositif de communication mobile sans fil comprend un boîtier et un dispositif de mémoire amovible qui est transporté par celui-ci et qui est configuré pour stocker le code UID.

3. Système de communication selon la revendication 2, dans lequel la mémoire amovible est constituée d'une carte de mémoire de module d'identité d'abonné, SIM.

4. Système de communication selon la revendication 1, dans lequel le code UID comprend au moins l'un des identificateurs suivants : identificateur de module d'identité d'abonné, SIM, identificateur de facturation et identificateur d'opérateur.

5. Système de communication selon la revendication 1, dans lequel le dispositif de communication mobile sans fil comprend en outre :
un écran d'affichage ;
un dispositif d'entrée ;
un émetteur-récepteur sans fil ; et
un contrôleur configuré pour :
afficher sur l'écran d'affichage le message d'invite pour la saisie dudit au moins un élément justificatif d'utilisateur pour l'accès au courriel ;
recevoir ledit au moins un élément justificatif d'utilisateur pour l'accès au courriel par l'intermédiaire du dispositif d'entrée ; et
envoyer ledit au moins un élément justificatif d'utilisateur pour l'accès au courriel par l'intermédiaire de l'émetteur-récepteur sans fil.

6. Système de communication selon la revendication 1, dans lequel ledit au moins un élément justificatif d'utilisateur pour l'accès au courriel comprend au moins un mot de passe.

7. Système de communication selon la revendication 1, dans lequel le courriel mis en file d'attente correspond à une pluralité de comptes de courriel.

8. Système de communication selon la revendication 7, dans lequel le serveur de courriel est configuré pour coopérer avec le dispositif de communication mobile sans fil pour inviter à la suppression d'au moins un compte de courriel.

9. Système de communication selon la revendication 1, comprenant en outre une base de données distante d'éléments justificatifs, accessible au serveur de courrier, afin de valider ledit au moins un élément justificatif d'utilisateur pour l'accès au courriel.

10. Système de communication selon la revendication 1, comprenant en outre au moins un autre dispositif de communication configuré pour coopérer avec le serveur de courriel pour inviter à la saisie d'au moins un élément justificatif d'utilisateur pour l'accès au courriel.

11. Serveur de courriel destiné à coopérer avec un dispositif de communication mobile sans fil qui possède un code d'identification unique, UID, qui lui a été attribué et qui est configuré pour envoyer et recevoir des courriels, le serveur de courriel comprenant :
un contrôleur et une mémoire couplée à ce dernier et configurée, après détection d'un changement dans le code UID associé au dispositif de communication mobile sans fil, pour :
cesser d'envoyer le courriel mis en file d'attente au dispositif de communication mobile sans fil ; et
coopérer avec le dispositif de communication mobile sans fil pour fournir une invite de saisie d'au moins un élément justificatif d'utilisateur pour l'accès au courriel et, après validation dudit au moins un élément justificatif d'utilisateur pour l'accès au courriel, envoyer le courriel mis en file d'attente au dispositif de communication mobile sans fil.

12. Serveur de courriel selon la revendication 11, dans lequel ledit moins un élément justificatif d'utilisateur pour l'accès au courriel comprend au moins un mot de passe.

13. Serveur de courriel selon la revendication 11, dans lequel le courriel mis en file d'attente correspond à une pluralité de comptes de courriel.

14. Procédé de communication comprenant, après détection d'un changement dans le code UID associé au dispositif de communication mobile sans fil, les étapes consistant à :
cesser d'envoyer au dispositif de communication mobile sans fil le courriel mis en file d'attente et stocké sur un serveur de courriel ; et
coopérer avec le dispositif de communication mobile sans fil pour fournir une invite de saisie d'au moins un élément justificatif d'utilisateur pour l'accès au courriel et, après validation dudit au moins un élément justificatif d'utilisateur pour l'accès au courriel, envoyer le courriel mis en file d'attente entre le serveur de courriel et le dispositif de communication mobile sans fil.

15. Procédé selon la revendication 14, dans lequel le code UID comprend au moins l'un des identificateurs suivants : identificateur de module d'identité d'abonné, SIM, identificateur de facturation et identificateur d'opérateur.
